# EUROPEAN PATENT APPLICATION

(11) **EP 4 026 875 A1**
(43) Date of publication of application: **13.07.2022**
(21) Application number: 20870594.7
(22) Date of filing: 17.06.2020
(51) Int. Cl.: C08L 67/02, C08K 5/103, C08K 5/29, C08L 71/02

(54) **POLYBUTYLENE TEREPHTHALATE RESIN COMPOSITION**

(30) Priority: 30.09.2019 JP 2019178378
(71) Applicant: Polyplastics Co., Ltd., Tokyo 108-8280 (JP)
(72) Inventor: GOSHIMA, Kazuya, Fuji-shi, Shizuoka 416-8533 (JP); ASAI, Yoshihiro, Fuji-shi, Shizuoka 416-8533 (JP)
(74) Representative: Maiwald Patent- und Rechtsanwaltsgesellschaft mbH
(86) International application number: PCT/JP2020/023756
(87) International publication number: WO 2021/065094

(57) **Abstract**

The objective of the present invention is to provide a polybutylene terephthalate resin composition having excellent hydrolysis resistance. The objective of the present invention is achieved by a polybutylene terephthalate resin composition containing at least (A) a polybutylene terephthalate resin in which the amount of terminal carboxyl groups is 1-9 meq/kg or less, and (B) a carbodiimide compound, wherein the amount of carbodiimide functional groups in the carbodiimide compound is 4-40 equivalents with respect to the amount of the terminal carboxyl groups, and a value obtained by subtracting the amount of the terminal carboxyl groups in the polybutylene terephthalate resin from the amount of the carbodiimide functional groups in the carbodiimide compound is 25 meq/kg or more.

## Description

### TECHNICAL FIELD

The present invention relates to a polybutylene terephthalate resin composition having excellent hydrolysis resistance and fluidity.

### BACKGROUND ART

Since a polybutylene terephthalate resin has excellent mechanical characteristics, electrical characteristics, heat resistance, weathering resistance, water resistance, chemical resistance and solvent resistance, it is widely utilized for various applications, such as automobile parts and electrical and electronic parts, as an engineering plastic.

However, the polybutylene terephthalate resin has a problem in hydrolysis resistance, and it does not necessarily have sufficient durability in the use in a high-temperature high-humidity environment.

Then, studies to improve hydrolysis resistance of a polybutylene terephthalate resin composition from the material side have been made. For example, in Patent Document 1, a polybutylene terephthalate resin composition in which a polybutylene terephthalate resin is blended with a carbodiimide compound and a fibrous filler is disclosed.

According to Patent Document 1, the resin composition described in Patent Document 1 is considered to have high strength, excellent heat shock resistance and excellent tensile strength retention ratio (hydrolysis resistance) after a pressure cooker test. In the resin composition described in this Patent Document 1, however, viscosity increase due to reaction of the polybutylene terephthalate resin with the carbodiimide compound is a problem. Moreover, according to the examples of Patent Document 1, some fluidity improving effect is seen by using a fatty acid ester in combination, but hydrolysis resistance is impaired.

It is also known that in order to improve fluidity of a resin composition during molding, a polybutylene terephthalate resin is blended with a fluidity improver. For example, in Patent Document 2, a polybutylene terephthalate resin composition having excellent fluidity in which a polybutylene terephthalate resin is blended with a glycerol fatty acid ester is disclosed, but in this document, any technique to also improve hydrolysis resistance has not been found.

Patent Document 1: PCT International Publication No.WO2009/150830
Patent Document 2: PCT International Publication No.WO2009/050859

### DISCLOSURE OF THE INVENTION

### Problems to be Solved by the Invention

However, addition of the carbodiimide compound is limited, and there is a quantitative relationship in which even if the carbodiimide compound is added in a certain amount or more with respect to the terminal carboxyl groups in the polybutylene terephthalate resin, the degree of the effect reaches its peak, and further improvement in the effect cannot be expected.

The present invention has been made in order to solve the problem, and the objective of the present invention is to provide a polybutylene terephthalate resin composition having excellent hydrolysis resistance.

### Means for Solving the Problems

The present inventors have achieved the objective of the present invention by the following.

A first aspect of the present invention relates to a polybutylene terephthalate resin composition including at least (A) a polybutylene terephthalate resin in which the amount of terminal carboxyl groups is 1 to 9 meq/kg or less, and (B) a carbodiimide compound, wherein the amount of carbodiimide functional groups in the carbodiimide compound is 4 to 40 equivalents with respect to 1 equivalent of the terminal carboxyl groups, and a value obtained by subtracting the amount of terminal carboxyl groups in the polybutylene terephthalate resin from the amount of carbodiimide functional groups in the carbodiimide compound is 25 meq/kg or more. A second aspect of the present invention relates to the resin composition as described in the first aspect, having a tensile strength retention ratio of 80% or more in a cooling/heating cycle test in accordance with USCAR-2 (5. 6. 2 Temperature/Humidity Cycling) Class 5. A third aspect of the present invention relates to the resin composition according to the first or second aspect, having a melt viscosity of 0.3 kPa·s or less as measured by ISO 11443 at 260°C. A fourth aspect of the present invention relates to the polybutylene terephthalate resin composition according to any one of the first to third aspects, including (C) a polyvalent hydroxyl group-containing compound.

### Effects of the Invention

According to the present invention, a polybutylene terephthalate resin composition having excellent hydrolysis resistance can be obtained.

### PREFERRED MODE FOR CARRYING OUT THE INVENTION

Hereinafter, embodiments of the present invention will be described in detail. The present invention is not limited to the following embodiments.

### <Polybutylene terephthalate resin composition>

The polybutylene terephthalate resin composition of the present invention is a polybutylene terephthalate resin composition including at least (A) a polybutylene terephthalate resin in which the amount of terminal carboxyl groups is 1 to 9 meq/kg, and (B) a carbodiimide compound, and is characterized in that the amount of carbodiimide functional groups in the carbodiimide compound is 4 to 40 equivalents with respect to 1 equivalent of the terminal carboxyl groups.

It has been found by the present invention that by adding a carbodiimide compound in large excess with respect to the terminal carboxyl groups when the amount of terminal carboxyl groups in the polybutylene terephthalate resin is as small as 9 meq/kg or less, improvement in hydrolysis resistance does not reach its peak, and hydrolysis resistance is greatly improved.

### <(A) Polybutylene terephthalate resin>

(A) The polybutylene terephthalate resin in the present invention is a thermoplastic resin having, as polymerization components, at least terephthalic acid (terephthalic acid or its ester-forming derivative) and an alkylene glycol having 4 carbon atoms (1,4-butanediol) or its ester-forming derivative. In (A) the polybutylene terephthalate resin, the amount of terminal carboxyl groups is 1 to 9 meq/kg.

Examples of (A) the polybutylene terephthalate resins (also referred to as PBT resins hereinafter) which are base resins include a homopolyester (polybutylene terephthalate) consisting of repeating units derived from butylene terephthalate, or a copolyester (butylene terephthalate copolymer or polybutylene terephthalate copolyester) having repeating units derived from butylene terephthalate as principal components and having repeating units derived from a monomer capable of copolymerization in a ratio described later.

Examples of the monomers capable of copolymerization in the copolyester (butylene terephthalate copolymer or modified PBT resin) (sometimes also simply referred to as copolymerizable monomers hereinafter) include dicarboxylic acid components except terephthalic acid, diols except 1,4-butanediol, oxycarboxylic acid components and lactone components. The copolymerizable monomers can be used singly or in combination of two or more.

Examples of the dicarboxylic acids (or dicarboxylic acid components or dicarboxylic acids) include aliphatic dicarboxylic acids (e.g., C₄₋₄₀ dicarboxylic acids, preferably C₄₋₁₄ dicarboxylic acids, such as succinic acid, glutaric acid, adipic acid, pimelic acid, suberic acid, azelaic acid, sebacic acid, undecanedicarboxylic acid, dodecanedicarboxylic acid, hexadecanedicarboxylic acid and dimer acid), alicyclic dicarboxylic acid components (e.g., C₈₋₁₂ dicarboxylic acids, such as hexahydrophthalic acid, hexahydroisophthalic acid, hexahydroterephthalic acid and himic acid), aromatic dicarboxylic acid components except terephthalic acid (e.g., C₈₋₁₆ dicarboxylic acids, such as phthalic acid, isophthalic acid, naphthalenedicarboxylic acids, such as 2,6-naphthalenedicarboxylic acid, 4,4'-diphenyldicarboxylic acid, 4,4'-diphenoxyetherdicarboxylic acid, 4,4'-diphenyletherdicarboxylic acid, 4,4'-diphenylmethanedicarboxylic acid and 4,4'-diphenylketonedicarboxylic acid), or reactive derivatives of these (e.g., lower alkyl esters (C₁₋₄ alkyl esters of phthalic acid or isophthalic acid, such as dimethylphthalic acid and dimethylisophthalic acid (DMI), and derivatives capable of forming esters, such as acid chlorides and acid anhydrides)).

Furthermore, polyvalent carboxylic acids, such as trimellitic acid and pyromellitic acid, their ester-forming derivatives (alcohol esters, etc.), etc. may be used in combination, when needed. When such a polyfunctional compound is used in combination, a branched polybutylene terephthalate resin can also be obtained.

Examples of the diols (or diol components or diols) include aliphatic alkanediols except 1,4-butanediol [e.g., alkanediols (e.g., lower alkanediols, preferably straight-chain or branched chain C₂₋₁₂ alkanediols, more preferably straight-chain or branched chain C₂₋₁₀ alkanediols, such as ethylene glycol, trimethylene glycol, propylene glycol, neopentyl glycol, hexanediol (1,6-hexanediol, etc.), octanediol (1,3-octanediol, 1,8-octanediol, etc.) and decanediol); and (poly)oxyalkylene glycols (e.g., glycols having a plurality of oxy C₂₋₄ alkylene units, e.g., diethylene glycol, dipropylene glycol, ditetramethylene glycol, triethylene glycol, tripropylene glycol, polytetramethylene glycol, etc.) etc.], alicyclic diols (e.g., 1,4-cyclohexanediol, 1,4-cyclohexanedimethanol, hydrogenated bisphenol A, etc.), aromatic diols [e.g., dihydroxy C₆₋₁₄ arenes, such as hydroquinone, resorcinol and naphthalenediol; biphenols (4,4'-dihydrobiphenyl, etc.); bisphenols; xylylene glycol, etc.], and reactive derivatives of these (e.g., ester-forming derivatives, such as alkyl, alkoxy or halogen substituted products).

### Furthermore, polyols such as glycerol,

trimethylolpropane, trimethylolethane and pentaerythritol, or their ester-forming derivatives may be used in combination, when needed. When such a polyfunctional compound is used in combination, a branched polybutylene terephthalate resin can also be obtained.

Examples of the bisphenols include bis(hydroxyaryl)C₁₋₆ alkanes, such as bis(4-hydroxyphenyl)methane (bisphenol F), 1,1-bis(4-hydroxyphenyl)ethane (bisphenol AD), 1,1-bis(4-hydroxyphenyl)propane, 2,2-bis(4-hydroxypheny)propane (bisphenol A), 2,2-bis(4-hydroxy-3-methylphenyl)propane, 2,2-bis(4-hydroxyphenyl)butane, 2,2-bis(4-hydroxyphenyl)-3-methylbutane, 2,2-bis(4-hydroxyphenyl)hexane and 2,2-bis(4-hydroxyphenyl)-4-methylpentane, bis(hydroxyaryl)C₄₋₁₀ cycloalkanes, such as 1,1-bis(4-hydroxyphenyl)cyclopentane and 1,1-bis(4-hydroxyphenyl)cyclohexane, 4,4'-dihydroxydiphenyl ether, 4,4'-dihydroxydiphenyl sulfone, 4,4'-dihydroxydiphenyl sulfide, 4,4'-dihydroxydiphenyl ketone, and alkylene oxide adducts of these. Examples of the alkylene oxide adducts include C₂₋₃ alkylene oxide adducts of bisphenols (e.g., bisphenol A, bisphenol AD, bisphenol F), such as 2,2-bis[4-(2-hydroxyethoxy)phenyl]propane, diethoxylated bisphenol A (EBPA), 2,2-bis[4-(2-hydroxypropoxy)phenyl]propane and dipropoxylated bisphenol A.

The number of moles of alkylene oxide (C₂₋₃ alkylene oxide, such as ethylene oxide or propylene oxide) added is 1 to 10 mol, preferably about 1 to 5 mol, with respect to each hydroxyl group.

Examples of the oxycarboxylic acids (or oxycarboxylic acid components or oxycarboxylic acids) include oxycarboxylic acids, such as oxybenzoic acid, oxynaphthoic acid, hydroxyphenylacetic acid, glycolic acid and oxycaproic acid, or derivatives of these. Examples of the lactones include C₃₋₁₂ lactones, such as propiolactone, butyrolactone, valerolactone and caprolactone (e.g., ε-caprolactone, etc.).

Among these copolymerizable monomers, preferable are diols [C₂₋₆ alkylene glycols (straight-chain or branched chain alkylene glycols, such as ethylene glycol, trimethylene glycol, propylene glycol and hexanediol), polyoxy C₂₋₄ alkylene glycols having oxyalkylene units of a repetition number of about 2 to 4 (diethylene glycol, etc.), bisphenols (bisphenols, alkylene oxide adducts thereof, etc.)], dicarboxylic acids [C₆₋₁₂ aliphatic dicarboxylic acids (adipic acid, pimelic acid, suberic acid, azelaic acid, sebacic acid, etc.), asymmetric aromatic dicarboxylic acids in which carboxyl groups are substituted at asymmetric positions of an arene ring, 1,4-cyclohexanedimethanol, etc.], etc.

(A) The polybutylene terephthalate resin is preferably a homopolyester (polybutylene terephthalate) and/or a copolymer (polybutylene terephthalate copolyester). (A) The polybutylene terephthalate resin may be a copolyester in which the ratio of the copolymerizable monomer (degree of modification) is usually 45 mol% or less (e.g., about 0 mol% or more and 45 mol% or less), preferably 35 mol% or less (e.g., about 0 mol% or more and 35 mol% or less) and more preferably 30 mol% or less (e.g., about 0 mol% or more and 30 mol% or less).

In the copolymer, the ratio of the copolymerizable monomer can be selected from the range of, for example, about 0.01 mol% or more and 30 mol% or less, and is usually about 1 mol% or more and 30 mol% or less, preferably about 3 mol% or more and 25 mol% or less and more preferably about 5 mol% or more and 20 mol% or less.

When a homopolyester (polybutylene terephthalate) and a copolymer (copolyester) are used in combination, the ratio of the homopolyester to the copolyester is in such a range that the ratio of the copolymerizable monomer becomes 0.1 mol% or more and 30 mol% or less (preferably about 1 mol% or more and 25 mol% or less, more preferably about 5 mol% or more and 25 mol% or less) with respect to all the monomers, and can be usually selected from the range of the former/the latter = 99/1 to 1/99 (mass ratio), preferably 95/5 to 5/95 (mass ratio) and more preferably 90/10 to 10/90 (mass ratio).

The amount of terminal carboxyl groups in (A) the polybutylene terephthalate resin is 1 to 9 meq/kg. A more preferred amount of terminal carboxyl groups is 2 to 8 meq/kg, and a still more preferred amount of terminal carboxyl groups is 3 to 6 meq/kg.

In order to allow the amount of terminal carboxyl groups to be within this range, a high-molecular weight polymer having a small amount of terminal groups in the polybutylene terephthalate resin may be used, or a polymer obtained by increasing a molecular weight of a melt polymerization product with IV = about 0.1 to 0.8 dl/g by solid polymerization may be used. When the solid polymerization is used and if the treatment temperature is high, the terminal carboxyl groups increase, so that treatment at a low temperature for a long time is desirable, but if the temperature is too low, the polymerization rate is low, and the productivity is poor, so that the temperature can be adjusted to, for example, 120 to 220°C, preferably 140 to 200°C, more preferably about 150 to 190°C, usually under reduced pressure or in an inert gas atmosphere.

When batch polymerization is used and if the resin discharge time is long after polymerization, the carboxyl group terminals increase by thermal decomposition, so that a polymer which is discharged early and has a small amount of terminal carboxyl groups may be used.

The intrinsic viscosity (IV) of (A) the polybutylene terephthalate resin is preferably 0.6 dL/g or more, and may be more preferably 0.7 dL/g or more. The intrinsic viscosity is preferably 1.3 dL/g or less, and more preferably 1.2 dL/g or less. By blending (A) polybutylene terephthalate resins having different intrinsic viscosities, for example, by blending polybutylene terephthalate resins having intrinsic viscosities of 1.5 dL/g and 0.5 dL/g, an intrinsic viscosity of 0.6 to 1.3 dL/g or less may be achieved.

The intrinsic viscosity (IV) can be measured under the conditions of a temperature of 35°C in o-chlorophenol. When a polybutylene terephthalate resin having an intrinsic viscosity in such a range is used, impartation of sufficient hydrolysis resistance and reduction of a melt viscosity tend to be efficiently achieved.

As (A) the polybutylene terephthalate resin, a commercial product may also be used, or a product produced by subjecting terephthalic acid or its reactive derivative, 1,4-butanediol, and if necessary, a copolymerizable monomer to copolymerization (polycondensation) through a conventional method, such as transesterification or direct esterification, may also be used.

### <(B) Carbodiimide compound>

(B) The carbodiimide compound used in the present invention is a compound having a carbodiimide group (-N=C=N-) in a molecule. As the carbodiimide compound, any of an aliphatic carbodiimide compound whose main chain is aliphatic, an alicyclic carbodiimide compound whose main chain is alicyclic and an aromatic carbodiimide compound whose main chain is aromatic can be used, but from the viewpoint of hydrolysis resistance, use of an aromatic carbodiimide compound is preferable.

Examples of the aliphatic carbodiimide compounds include diisopropylcarbodiimide, dioctyldecylcarbodiimide, di-tert-butylcarbodiimide, 1-ethyl-3-tert-butylcarbodiimide, 1-(2-butyl)-3-ethylcarbodiimide, 1,3-di-(2-butyl)carbodiimide and poly(diisopropylcarbodiimide). Examples of the alicyclic carbodiimide compounds include dicyclohexylcarbodiimide and poly(diisopropylcarbodiimide).

Examples of the aromatic carbodiimide compounds include mono- or di-carbodiimide compounds, such as diphenylcarbodiimide, di-2,6-dimethylphenylcarbodiimide, di-2,6-diethylphenylcarbodiimide, di-2,6-diisopropylphenylcarbodiimide, di-2,6-di-tert-butylphenylcarbodiimide, N-triyl-N'-phenylcarbodiimide, N-(2,6-diisopropyl-4-phenoxyphenyl)-N-tert-butylcarbodiimide, N,N-bis[3-isocyanato-2,4,6-tris(1-methylethyl)phenylamino]carbodiimide, N-cyclohexyl-N-(4-(dimethylamino)naphthyl)carbodiimide, di-o-tolylcarbodiimide, di-p-tolylcarbodiimide, di-p-nitrophenylcarbodiimide, di-p-aminophenylcarbodiimide, di-p-hydroxyphenylcarbodiimide, di-p-chlorphenylcarbodiimide, di-p-methoxyphenylcarbodiimide, di-3,4-dichlorphenylcarbodiimide, di-2,5-dichlorphenylcarbodiimide, di-o-chlorphenylcarbodiimide, di-2,4,6-trimethylphenylcarbodiimide, di-2,4,6-triisopropylphenylcarbodiimide, di-2,4,6-triisobutylphenylcarbodiimide, p-phenylene-bis-di-o-triylcarbodiimide, p-phenylene-bis-dicyclohexylcarbodiimide, p-phenylene-bis-di-p-chlorphenylcarbodiimide and ethylene-bis-diphenylcarbodiimide, poly(4,4'-diphenylmethanecarbodiimide), poly(p-phenylenecarbodiimide), poly(m-phenylenecarbodiimide), poly(3,3'-dimethyl-4,4'-diphenylmethanecarbodiimide), poly(naphthylenecarbodiimide), poly(1,3-diisopropylphenylenecarbodiimide), poly(1-methyl-3,5-diisopropylphenylenecarbodiimide), poly(1,3,5-triethylphenylenecarbodiimide), poly(diisopropylphenylenecarbodiimide) and poly(triisopropylphenylenecarbodiimide). The above carbodiimide compounds can also be used in combination of two or more.

Among these, particularly, di-2,6-dimethylphenylcarbodiimide, poly(4,4'-diphenylmethanecarbodiimide), poly(phenylenecarbodiimide) and poly(triisopropylphenylenecarbodiimide) are preferably used.

It is preferable to use, as (B) the carbodiimide compound, one having a number-average molecular weight of 2000 or more. Use of (B) a carbodiimide compound having a number-average molecular weight of 2000 or more makes it possible to improve hydrolysis resistance of the polybutylene terephthalate resin composition over a long period of time. Moreover, even if the residence time in the melt kneading or the molding of the polybutylene terephthalate resin composition is long, such a use is advantageous from the viewpoint that generation of gas or odor can be reduced.

Regarding the blending amount of (B) the carbodiimide compound in the polybutylene terephthalate resin composition, the amount of carbodiimide functional groups is preferably 4 to 40 equivalents when the amount of terminal carboxyl groups in (A) the polybutylene terephthalate resin is 1 equivalent.

Regarding the blending amount, the amount of carbodiimide functional groups is more preferably 5 to 30 equivalents, and most preferably 8 to 25 equivalents, when the amount of terminal carboxyl groups in (A) the polybutylene terephthalate resin is 1 equivalent. When the amount is in this range, a polybutylene terephthalate resin composition having excellent fluidity in the molding process and mechanical characteristics after the molding process is obtained.

The amount obtained by subtracting the amount of terminal carboxyl groups in (A) the polybutylene terephthalate resin from the amount of functional groups in (B) the carbodiimide compound is 25 meq/kg or more, and more preferably 35 meq/kg or more.

The amount of carbodiimide functional groups means an amount of carbodiimide functional groups in the carbodiimide compound in the resin composition, and the carbodiimide equivalent means an amount of carbodiimide functional groups possessed by the carbodiimide compound.

<(C) Polyvalent hydroxyl group-containing compound> In the present invention, it is also preferable to add (C) a polyvalent hydroxyl group-containing compound. (C) The polyvalent hydroxyl group-containing compound is a compound having two or more hydroxyl groups in one molecule. (C) The polyvalent hydroxyl group-containing compound preferably has a hydroxyl value of 200 to 1000.

(C) The polyvalent hydroxyl group-containing compound also enhances fluidity of the polybutylene terephthalate resin composition. By using (C) the polyvalent hydroxyl group-containing compound, fluidity of the polybutylene terephthalate resin composition during melting can be efficiently improved while characteristics of (A) the polybutylene terephthalate resin are maintained at a high level.

Here, as the fluidity of the polybutylene terephthalate resin composition, the melt viscosity as measured under the conditions of a furnace body temperature of 260°C, a capillary of φ1 mm × 20 mmL and a shear rate of 1000 sec⁻¹ in accordance with ISO 11443 is preferably 0.3 kPa·s or less, more preferably 0.25 kPa·s or less and still more preferably 0.2 kPa·s or less (e.g., 0.18 kPa·s or less).

As (C) the polyvalent hydroxyl group-containing compound, one produced by a conventionally known method may be used, or a commercial product may be used.

The hydroxyl value of (C) the polyvalent hydroxyl group-containing compound is 200 or more. A preferred hydroxyl value is 250 or more. When the hydroxyl value is 200 or more, the fluidity improving effect tends to further increase, and in addition, an effect of also improving hydrolysis resistance is obtained.

On the other hand, when the hydroxyl value is too large, the reaction with (A) the polybutylene terephthalate excessively proceeds, so that the molecular weight of (A) the polybutylene terephthalate resin is decreased, and excellent characteristics such as mechanical characteristics, heat resistance and chemical resistance may be impaired. The hydroxyl value is preferably 1000 or less, and more preferably 500 or less.

The content of (C) the polyvalent hydroxyl group-containing compound in the polybutylene terephthalate resin composition is preferably 0.05 part by mass or more and 5 parts by mass or less with respect to 100 parts by mass of (A) the polybutylene terephthalate resin. The content is more preferably 0.1 part by mass or more and 3 parts by mass or less. The content is still more preferably 0.5 part by mass or more and 2 parts by mass or less.

It is preferable to use, as (C) the polyvalent hydroxyl group-containing compound in the present invention, a glycerol fatty acid ester or an ether obtained by addition polymerization of diglycerol with an alkylene oxide. Hereinafter, a glycerol fatty acid ester and an ether obtained by addition polymerization of diglycerol with an alkylene oxide will be described.

The glycerol fatty acid ester is an ester constituted of glycerol and/or its dehydration condensation product and a fatty acid. Among the glycerol fatty acid esters, preferable is one obtained by using a fatty acid having 12 or more carbon atoms.

Examples of the fatty acids having 12 or more carbon atoms include lauric acid, oleic acid, palmitic acid, stearic acid, 12-hydroxysteratic acid, behenic acid and montanic acid. Preferable is a fatty acid having 12 or more and 32 or less carbon atoms, and particularly preferable is a fatty acid having 12 or more and 22 or less carbon atoms.

Specifically, lauric acid, stearic acid, 12-hydroxystearic acid or behenic acid is particularly preferable. Use of a fatty acid having 12 or more carbon atoms is preferable because heat resistance of the resin tends to be able to be sufficiently maintained. It is preferable that the number of carbon atoms be 32 or less because the effect of improving fluidity is high.

Examples of preferred glycerol fatty acid esters include glycerol monostearate, glycerol monobehenate, diglycerol monostearate, triglycerol monostearate, triglycerol stearic acid partial ester, tetraglycerol stearic acid partial ester, decaglycerol lauric acid partial ester and glycerol mono-12-hydroxystearate.

Examples of the ethers obtained by addition polymerization of diglycerol with alkylene oxides include polyoxypropylene diglyceryl ether obtained by addition polymerization of diglycerol with propylene oxide and polyoxyethylene diglyceryl ether obtained by addition polymerization of diglycerol with ethylene oxide. In the present invention, particularly, use of polyoxyethylene diglyceryl ether among these ethers is preferable.

### <Other components>

In the resin composition of the present invention, other resins and conventionally known additives, such as a reinforcing filler, a flame retardant, an antioxidant, a heat stabilizer, an ultraviolet light absorber, an antistatic agent, a colorant, e.g., dye or pigment, a lubricant, a plasticizer and a crystal nucleating agent, can be contained as long as the effects of the present invention are not impaired. In the present invention, a transesterification reaction catalyst and a transesterification reaction terminator are sometimes preferably contained as other components.

If the composition contains a transesterification reaction catalyst, the reaction of (A) the polybutylene terephthalate resin with (C) the polyvalent hydroxyl group-containing compound is accelerated. When the reaction of (A) the polybutylene terephthalate resin with (C) the polyvalent hydroxyl group-containing compound is slow and it takes time to reach desired fluidity, desired fluidity can be rapidly attained by using a transesterification reaction catalyst.

The transesterification reaction catalyst is not particularly limited, and for example, a metal compound can be used as the transesterification catalyst. Above all, a titanium compound, a tin compound or an antimony compound is preferably used.

Specific typical examples of the titanium compounds include inorganic titanium compounds, such as titanium oxide, titanium alcoholates, such as tetramethyl titanate, tetraisopropyl titanate and tetrabutyl titanate, and titanium phenolates, such as tetraphenyl titanate. Specific examples of the tin compounds include dibutyltin oxide, hexaethylditin oxide, didodecyltin oxide, triethyltin hydroxide, tributyltin acetate, dibutyltin diacetate, diphenyltin dilaurate, monobutyltin trichloride, methylstannoic acid, ethylstannoic acid and butylstannoic acid. Examples of the antimony compounds include antimony trioxide. Among these, particularly, tetrabutyl titanate, tributyltin acetate and antimony trioxide are preferably used.

If the transesterification reaction excessively proceeds, physical properties of a molded body obtained by molding the resin composition may deteriorate. By adding a transesterification reaction terminator after the transesterification reaction, adjustment to desired fluidity can be carried out without occurrence of a problem such as deterioration of physical properties.

As the transesterification reaction terminator, a phosphorus compound can be preferably used. The type and the amount of the phosphorus compound are not particularly limited, and they can be appropriately adjusted according to the conditions, such as types of compounds contained in the composition of the present invention.

Examples of the phosphorus compounds which can be used include, but are not limited to, phosphine-based, phosphinite-based, posphonite-based, phosphite-based, phosphinous amide-based, phosphonous diamide-based, phosphorous triamide-based, phosphoramidite-based, phosphorodiamidite-based, phosphine oxide-based, phosphinate-based, phosphonate-based, phosphate-based, phosphinic amide-based, phosphonodimidate-based, phosphoramide-based, phosphoramidate-based, phosphorodiamidate-based, phosphine imide-based and phosphine sulfide-based phosphorus compounds. In the phosphorus compounds, salts thereof with metals are also included.

### <Hydrolysis resistance characteristics>

A molded article composed of the polybutylene terephthalate resin composition of the present invention has a tensile strength retention ratio of 80% or more in a cooling/heating cycle test in accordance with USCAR-2 (5. 6. 2 Temperature/Humidity Cycling) Class 5, and has a melt viscosity of 0.3 kPa·s or less as measured by ISO 11443 at 260°C.

The USCAR-2 is test conditions defined by North American Car Standards, and in its Class 5, a test under the environmental test conditions of one cycle of -40°C (0.5 hour) → 80 to 90°C, 80 to 100%RH (4 hours) → 175°C (1.5 hours) is repeated 40 cycles. It is shown that the polybutylene terephthalate resin composition of the present invention is at a level where it can be sufficiently used even in the temperature environment of the Class 5.

The tensile strength retention ratio can be calculated after measuring tensile strengths before and after the test in accordance with ISO 527-1, 2.

### <Method for producing polybutylene terephthalate resin composition>

The method for preparing the polyethylene terephthalate resin composition of the present invention is not particularly limited, and equipment and a method generally known for a method for preparing a resin composition can be used. For example, necessary components are mixed, the mixture is kneaded using a single screw or twin-screw extruder or other melt kneading devices, and thus, the composition can be prepared as pellets for molding.

A plurality of extruders or other melt kneading devices may be used. All the components may be fed through a hopper at the same time, or part of the components may be fed through a side feed opening. Here, the extruder cylinder temperature is preferably set in such a manner that the resin temperature in the extruder becomes 240 to 350°C. More preferable is 270 to 330°C.

When the temperature is lower than 240°C, the reaction of (A) the polybutylene terephthalate resin with (B) the carbodiimide compound and/or (C) the polyvalent hydroxyl group-containing compound is insufficient, and the hydrolysis resistance of the resin composition becomes insufficient or the melt is not sufficiently kneaded because of high viscosity, so that a resin composition having homogeneous characteristics may not be obtained. On the other hand, when the temperature exceeds 350°C, decomposition of the resin is liable to occur, and mechanical properties or hydrolysis resistance of the resin composition may become insufficient.

In the production of the composition of the present invention, (B) the carbodiimide compound and the transesterification reaction terminator can also be added after (A) the polybutylene terephthalate resin and (C) the polyvalent hydroxyl group-containing compound are previously melt-kneaded. In this case, (B) the carbodiimide compound is added in a state where the melt viscosity of (A) the polybutylene terephthalate resin has been decreased, and therefore, homogeneous melt kneading can be efficiently carried out.

As the method for addition, the components may be added through a side feed opening, or after (A) the polybutylene terephthalate resin and (C) the polyvalent hydroxyl group-containing compound are melt-kneaded and pelletized, the pellets, (B) the carbodiimide compound and a transesterification reaction terminator may be melt-kneaded again to produce the composition.

To the contrary, if (C) the polyvalent hydroxyl group-containing compound is added after (A) the polybutylene terephthalate resin and (B) the carbodiimide compound are previously melt-kneaded, the viscosity of (A) the polybutylene terephthalate increases due to the reaction of (A) the polybutylene terephthalate resin with (B) the carbodiimide compound, so that sufficient melt kneading with (C) the polyvalent hydroxyl group-containing compound is inhibited, moreover, heat generation due to shearing increases, and this may lead to thermal decomposition of (A) the polybutylene terephthalate resin.

In the case of adding a reinforcing filler as well, if the reinforcing filler is added after (A) the polybutylene terephthalate resin and (C) the polyvalent hydroxyl group-containing compound are previously melt-kneaded, breakage of the reinforcing filler is suppressed, and physical properties are not impaired, and therefore, when the reinforcing filler is used, a method in which (A) the polybutylene terephthalate resin and (C) the polyvalent hydroxyl group-containing compound are previously melt-kneaded is particularly preferable.

Regarding (B) the carbodiimide compound and the reinforcing filler, it is preferable to previously add the reinforcing filler because the interfacial adhesion between (A) the polybutylene terephthalate resin and the reinforcing filler becomes stronger.

It is also possible to blend (B) the carbodiimide compound as a masterbatch using a resin as a matrix, and use of a masterbatch is often easy from the viewpoint of actual handling. Although a masterbatch using a polybutylene terephthalate resin is preferably used, a masterbatch prepared using another resin may be used. In the case of a masterbatch using a polybutylene terephthalate resin, the blending amount may be adjusted so as to be in the prescribed range.

### EXAMPLES

Hereinafter, the present invention will be described in more detail with reference to examples, but the present invention is in no way limited to these. Unless otherwise noted, evaluation was carried out in an atmosphere of 23°C and 55RH%. The compounds described in Tables 1 and 2 are as follows.

### <Materials>

(A) Polybutylene terephthalate resin
   A-1: polybutylene terephthalate resin (intrinsic viscosity = 1.14 dL/g, amount of terminal carboxyl groups = 4 meq/kg, manufactured by POLYPLASTICS CO., LTD.)
   A-2: polybutylene terephthalate resin (intrinsic viscosity = 1.14 dL/g, amount of terminal carboxyl groups = 9 meq/kg, manufactured by POLYPLASTICS CO., LTD.)
   A-3: polybutylene terephthalate resin (intrinsic viscosity = 0.95 dL/g, amount of terminal carboxyl groups = 9 meq/kg, manufactured by POLYPLASTICS CO., LTD.)
   A-4: polybutylene terephthalate resin (intrinsic viscosity = 1.14 dL/g, amount of terminal carboxyl groups = 10 meq/kg, manufactured by POLYPLASTICS CO., LTD.)
   A-5: polybutylene terephthalate resin (intrinsic viscosity = 0.83 dL/g, amount of terminal carboxyl groups = 13 meq/kg, manufactured by POLYPLASTICS CO., LTD.)
(B) Carbodiimide compound
   B-1: Stabaxol P100, carbodiimide equivalents 3625 meq/kg (manufactured by LANXESS K.K.)
(C) Polyvalent hydroxyl group-containing compound C-1: glyceryl hydroxystearate (hydroxyl value 480, manufactured by RIKEN VITAMIN Co., Ltd., "Rikemal HC100") The hydroxyl value of (C) the polyvalent hydroxyl group-containing compound was measured by Japan Oil Chemists' Society 2. 3. 6. 2-1996 Hydroxyl Value (pyridine-acetic anhydride method).

### (Others)

Phenolic antioxidant: Irganox 1010 (manufactured by BASF SE) Phosphoric acid-based antioxidant: Adekastab PEP-36 (manufactured by Adeka Corporation)
Sulfur-based antioxidant: Adekastab AO-412S (manufactured by Adeka Corporation), Lubricant: Rikemal B74 (manufactured by RIKEN VITAMIN Co., Ltd.)

### <Examples 1 to 14, Comparative Examples 1 to 6>

(A) A polybutylene terephthalate resin, (B) a carbodiimide compound, and other components were weighed according to the blending composition shown in Table 1, then dry-blended and melt-kneaded by a twin-screw extruder (TEX-30 manufactured by The Japan Steel Works, Ltd.) at a resin temperature (°C) in extrusion kneading described in Table 1, a screw rotation speed of 130 rpm and an extrusion rate of 12 kg/h, and the discharged molten resin in the form of strands was cooled and cut with a pelletizer, thereby obtaining a pellet sample of a resin composition. Subsequently, using these pellets, the following various evaluations were carried out.

### [Equivalent ratio of amount of carbodiimide functional groups to amount of terminal carboxyl groups]

The amount of terminal carboxyl groups was determined by dissolving a pulverized sample of the resin composition pellets of the present invention in benzyl alcohol at 215°C for 10 minutes and then titrating it with a 0.01 N sodium hydroxide aqueous solution. The equivalent ratios of the amounts of the carbodiimide functional groups to be mixed to the measurement results for the amounts of the terminal carboxyl groups are set forth in Tables 1 and 2. Equivalent ratio of amount of carbodiimide functional groups to amount of terminal carboxyl groups = amount of carbodiimide functional groups/amount of terminal carboxyl groups

### [Value obtained by subtracting amount of terminal carboxyl groups from amount of carbodiimide functional groups]

The value obtained by subtracting the amount of terminal carboxyl groups in the polybutylene terephthalate resin from the amount of carbodiimide functional groups in the carbodiimide compound is determined by the following formula, as a value obtained by subtracting the amount of terminal carboxyl groups contained in 1 kg of the polybutylene terephthalate resin from the amount of carbodiimide functional groups to be mixed per 1 kg of the polybutylene terephthalate resin. The values are set forth in Tables 1 and 2. Value obtained by subtracting amount of terminal carboxyl groups from amount of carbodiimide functional groups (meq/PBT·kg) = amount of carbodiimide functional groups to be mixed per 1 kg of polybutylene terephthalate resin - amount of terminal carboxyl groups contained in 1 kg of polybutylene terephthalate resin

### [Melt viscosity characteristics]

The pellets of the resin composition of the present invention were dried at 140°C for 3 hours, and then, using Capilograph 1B (manufactured by Toyo Seiki Seisaku-sho, Ltd.), the melt viscosity was measured under the conditions of a furnace body temperature of 260°C, a capillary of φ1 mm × 20 mmL, and a shear rate of 1000 sec⁻¹ in accordance with ISO 11443. The unit is kPa·s. The results are set forth in Tables 1 and 2.

### [Tensile strength retention ratio = durability evaluation]

The pellets of the resin composition of the present invention were dried at 140°C for 3 hours and then injection molded at a resin temperature of 260°C and a mold temperature of 80°C for an injection time of 15 seconds and a cooling time of 15 seconds to prepare an ISO 3167 tensile specimen, and the specimen was subjected to a cooling/heating cycle test in which a test under the environmental test conditions of one cycle of -40°C (0.5 hours) → 85°C, 85%RH (4 hours) → 175°C (1.5 hours) was repeated 40 cycles in accordance with USCAR-2 (5. 6. 2 Temperature/Humidity Cycling) Class 5, and before and after the test, tensile strength was measured in accordance with ISO 527-1, 2. The results are set forth in Tables 1 and 2.

The tensile strength retention ratio was calculated based on the following formula. Tensile strength retention ratio (unit: %) = (tensile strength after treatment/tensile strength before treatment) × 100

**[Table 1]**

| | | Example | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| (A) Polybutylene terephthalate resin | A-1 | 100 | 100 | 100 | | | 100 | 100 | 100 | 100 | 100 | 100 | 100 | 100 | 100 |
| | A-2 | | | | | 100 | | | | | | | | | |
| | A-3 | | | | 100 | | | | | | | | | | |
| | A-4 | | | | | | | | | | | | | | |
| | A-5 | | | | | | | | | | | | | | |
| (B)Carbodimide com pound | B-1 | 1.3 | 1.9 | 2.7 | 1.3 | 1.3 | 1.3 | 1.9 | 1.9 | 1.9 | 2.0 | 1.3 | 1.3 | 1.3 | 0.8 |
| (C) Polyvalent hydroxy l group-conta in ing com pound | C-1 | 0.6 | 0.6 | 0.6 | 0.6 | 0.6 | 0.6 | | | | 5.4 | 0.6 | 0.6 | 0.6 | 0.6 |
| Phenolic antioxidant | | 0.1 | 0.1 | 0.1 | 0.1 | 0.1 | 0.1 | 0.1 | 0.1 | 0.1 | 0.1 | 0.1 | 0.1 | 0.1 | 0.1 |
| Phosphorus-based antoxidant | | | | | | | | | | | | | 0.1 | | |
| Sulfur-based antoxidant | | | | | | | | | | | | 0.1 | 0.1 | | |
| Lubrbant | | 0.2 | 0.2 | 0.2 | 0.2 | 0.2 | 0.2 | 0.2 | 0.2 | 0.2 | 0.2 | 0.2 | 0.2 | 0.2 | 0.2 |
| Potassium acetate | | 0.003 | 0.003 | 0.003 | 0.003 | 0.003 | 0.003 | 0.003 | 0.003 | 0.003 | 0.003 | 0.003 | 0.003 | 0.003 | 0.003 |
| Resin temperature in extrusion kneading (°C) | | 300 | 300 | 300 | 300 | 300 | 280 | 300 | 280 | 320 | 300 | 300 | 300 | 250 | 300 |
| Carbodiimide functional group/terminal carboxylgroup equivalent ratio | | 12.1 | 17.1 | 24.5 | 5.4 | 5.4 | 12.1 | 17.0 | 17.0 | 17.0 | 17.9 | 12.1 | 12.1 | 12.1 | 7.6 |
| Am ount obtained by subtracting am ountofPBT term inalcarboxyl groups from am ount of carbodiimide functional groups (m eq/PBTkg) | | 44.2 | 63.9 | 94.2 | 39.2 | 39.2 | 44.2 | 63.9 | 63.9 | 63.9 | 67.5 | 44.2 | 44.2 | 44.2 | 26.5 |
| Melt viscosity (kPa▪s) | | 0.17 | 0.17 | 0.16 | 0.17 | 0.19 | 0.25 | 0.28 | 0.29 | 0.26 | 0.1 | 0.17 | 0.25 | 0.3 | 0.18 |
| Melt viscosity judgement | | ⊚ | ⊚ | ⊚ | ⊚ | ⊚ | ⊚ | ○ | ○ | ○ | ⊚ | ⊚ | ⊚ | Δ | ⊚ |
| Tensile strength retention ratio | | 98 | 98 | 98 | 96 | 98 | 98 | 99 | 100 | 98 | 85 | 98 | 98 | 98 | 93 |

**[Table 2]**

| | | Comparative Example | | | | | |
|---|---|---|---|---|---|---|---|
| | | 1 | 2 | 3 | 4 | 5 | 6 |
| (A) Polybutylene terephthalate resin | A-1 | 100 | | | | | |
| | A-2 | | | | | | |
| | A-3 | | | | | | 100 |
| | A-4 | | | | | 100 | |
| | A-5 | | 100 | 100 | 100 | | |
| (B)Carbodiimide com pound | B-1 | 0.7 | 1.9 | 1.9 | 2.7 | 1.3 | 1.0 |
| (C) Polyvaent hydroxyl group-conta in ing com pound | C-1 | 0.6 | | | | 0.6 | 0.6 |
| Phenolic antioxidant | | 0.1 | 0.1 | 0.1 | 0.1 | 0.1 | 0.1 |
| Phosphorus-based antioxidant | | | 0.1 | 0.1 | 0.1 | | |
| Sulfur-based antioxidant | | | | | | | |
| Lubricant | | 0.2 | 0.2 | 0.2 | 0.2 | 0.2 | 0.2 |
| Potassium acetate | | 0.003 | 0.003 | 0.003 | 0.003 | 0.003 | 0.003 |
| Resh tem perature in extrusion kneading (°C) | | 300 | 250 | 300 | 250 | 300 | 300 |
| Carbodiimide functional group/terminal carboxyl group equivalent ratio | | 6.5 | 5.2 | 5.2 | 7.5 | 4.8 | 3.9 |
| Am ount obtained by subtracting am ount of PBT terminal carboxyl groups from am ount of carbodiimide functional groups (m eq/PBTkg) | | 21.8 | 54.9 | 54.9 | 84.6 | 38.2 | 26.2 |
| Melt viscosity (kPa▪s) | | 0.14 | 0.19 | 0.18 | 0.18 | 0.35 | 0.18 |
| Melt viscosity judgement | | ⊚ | ⊚ | ⊚ | ⊚ | × | ⊚ |
| Tensile strength retention ratio | | 32 | 39 | 40 | 53 | 98 | 55 |

From the results of the examples and the results of the comparative examples, it has been confirmed that according to the present invention, a polybutylene terephthalate resin composition having excellent hydrolysis resistance is obtained.

## Claims

1. A polybutylene terephthalate resin composition comprising at least (A) a polybutylene terephthalate resin (PBT) in which the amount of terminal carboxyl groups is 1 to 9 meq/kg or less, and (B) a carbodiimide compound, wherein the amount of carbodiimide functional groups in the carbodiimide compound is 4 to 40 equivalents with respect to 1 equivalent of the terminal carboxyl groups in the polybutylene terephthalate resin, and a value obtained by subtracting the amount of terminal carboxyl groups in the polybutylene terephthalate resin from the amount of carbodiimide functional groups in the carbodiimide compound is 25 meq/PBT·kg or more.

2. The resin composition according to claim 1, having a tensile strength retention ratio of 80% or more in a cooling/heating cycle test in accordance with USCAR-2 (5. 6. 2 Temperature/Humidity Cycling) Class 5.

3. The resin composition according to claim 1 or 2, having a melt viscosity of 0.3 kPa·s or less as measured by ISO 11443 at 260°C.

4. The polybutylene terephthalate resin composition according to any one of claims 1 to 3, comprising (C) a polyvalent hydroxyl group-containing compound.
